(19) **Europäisches Patentamt / European Patent Office / Office européen des brevets**

(11) **EP 2 759 524 A1**

(12) # EUROPEAN PATENT APPLICATION
published in accordance with Art. 153(4) EPC

(43) Date of publication:
**30.07.2014 Bulletin 2014/31**

(21) Application number: **12834279.7**

(22) Date of filing: **18.09.2012**

(51) Int Cl.:
**C03C 8/04** *(2006.01)*    **C04B 41/89** *(2006.01)*

(86) International application number:
**PCT/ES2012/070655**

(87) International publication number:
**WO 2013/041751 (28.03.2013 Gazette 2013/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2011 ES 201131517 P**

(71) Applicants:
• **Consejo Superior De Investigaciones Científicas (CSIC)**
  **28006 Madrid (ES)**
• **Kerafrit, S.A.**
  **12520 Nules (Castellón de la Plana) (ES)**
• **Nanobiomatters Industries, S.l.**
  **46980 Paterna, Valencia (ES)**

(72) Inventors:
• **FERNÁNDEZ LOZANO, José Francisco**
  **E-28049 Madrid (ES)**
• **JIMÉNEZ REINOSA, Julián**
  **E-28049 Madrid (ES)**
• **MENÉNDEZ MEDINA, José Javier**
  **E-46980 Paterna (Valencia) (ES)**
• **CAMPILLO MARTÍNEZ, Ángel**
  **E-12520 Nules (Castellón) (ES)**
• **JAQUOTOT GARCÍA, Pedro José**
  **E-12520 Nules (Castellón) (ES)**

(74) Representative: **Ungria López, Javier**
  **Avda. Ramón y Cajal, 78**
  **28043 Madrid (ES)**

(54) **COMBINATION AND METHOD FOR OBTAINING BACTERICIDAL CERAMIC ENAMELS FOR CERAMIC PRODUCTS**

(57) The invention relates to a combination for a bactericidal ceramic enamel with micro-roughness, characterised in that it comprises a first formulation and a second formulation, each formulation having a defined quantity of zinc cations, such that the first formulation comprises an equivalent percentage of ZnO of < 20 wt. %, and the second formulation comprises an equivalent percentage of ZnO of less than the nominal corresponding to the composition of the first formulation. The invention also relates to a bactericidal ceramic enamel comprising the combination of formulations arranged such that the first formulation forms an outer layer of enamel in contact with the air and the second formulation forms an inner layer of enamel in contact with a surface, the outer layer being thinner than the inner layer, and to the use of the combination or the bactericidal enamel for applying to substrates and obtaining enamelled materials.

Figure 1

**Description**

**TECHNICAL FIELD**

This patent has its scope in the field of the preparation of formulations for the ceramics industry, in particular in enamel applications for glazed surfaces of ceramic products, in both the production of ceramic tiles and in structural ceramics, sanitary ceramics and ornamental ceramics.

More specifically the invention refers to a new type of bactericidal ceramic enamels.

**BACKGROUND ART**

Ceramic enamels are applied on multiple ceramic products used in different fields, such as for example: tableware, furniture, kitchen ceramic complements, ceramic floor and wall tiles, sanitary elements, structural ceramic elements, bathroom ceramic complements, ornamental ceramic elements, etc.

A ceramic enamel is the result of the fusion of a ground mixture that includes different minerals, metallic oxides, carbonates and glass, among others, [Esmaltes y pigmentos Cerámicos, P. Escribano, J. B. Carda y E. Cordoncillo, Faenza Editrice S.L. Castellón 2001]. It is normal practice to make a prior fusion of the different components to obtain a glass powder, called frit, which facilitates the technological application processes of the ceramic enamels. The ceramic enamel is generally prepared in the form of an aqueous suspension and is applied on the surface of the ceramic product. The enamel is consolidated using high temperature heat treatment. A final ceramic enamel is a glazed surface that consists of a glass matrix and can contain different crystalline phases, either previously introduced, or formed during the heat treatment. These crystalline phases are generally found dispersed in the glass matrix.

It is well known in the background art that the advantages of enamelled ceramic products lie in presenting a surface with no porosity, having high mechanical resistance and being resistant to chemical agents, such as acids and bases. These technical characteristics facilitate cleaning the enamelled surfaces. Enamelled ceramic surfaces maintain the colours in a long-lasting way and can be decorated with different patterns or elements such as stones, wood, metals, etc. can be reproduced. The aesthetic aspects in ceramic elements are highly regarded due to their stability over time and durability against external agents.

However, the ease of cleaning of ceramic products that have a ceramic enamel does not prevent bacteria from proliferating in the presence of the ceramic enamel. A bactericidal property in ceramic enamels is therefore a required property in this type of products.

There are several procedures in the background art to confer the bactericidal property to a ceramic enamel. One of the effects used to prevent the proliferation of bacteria on the surface of a ceramic product is the photocatalytic effect. This effect requires the presence of semiconductor crystalline structures consisting of crystalline particles of metallic ions in the enamel. These particles must be located on the outer surface of the enamel. Light absorption of the metallic ion crystals produces an electron-hole pair on the surface of the glass that interacts with the organic substances producing its oxidation. These processes are strongly favoured in presence of nanometric particles of semiconductor oxides, such as $TiO_2$, due to the quantum confinement phenomenon of the nanocrystals allowing obtaining excitons that reach the surface of said particles. Procedures exist to apply outer layers using soles on ceramic enamels based on particles of $TiO_2$ with silver and copper cations [JP3063735 B2]. The group is thermally consolidated. Other procedures that use the same effect consist of ceramic enamels that comprise oxide cations of rare earth such as, for example $CeO_2$, and are applied by mixing or fritting on ceramic floor and wall tiles [ES 2142249 B1]. The limitations presented by bactericidal enamels based on the photocatalytic effect lie in the need for illuminating the enamel, and generally require illumination with ultraviolet light. This limitation consists of rather a restriction of use, as the bactericidal effect is only achieved under illumination with ultraviolet light. Another even more limiting aspect of bactericidal enamels based on the photocatalytic effect is the need for the semiconductor particles to be located on the outer surface of the enamel, to be able to transfer the electrons produced by the photoexcitation. The efficiency of this type of solutions is, therefore, limited to the presence of semiconductor particles on the surface and in particular to the presence of semiconductor nanoparticles. The insulating nature of ceramic enamels is deleterious for the generation of electronic carriers in semiconductor particles of metallic oxides if the latter are found embedded in the glass matrix. Another unresolved aspect in the background art is how to preserve the nature of the semiconductor particles in the high temperature heat treatment processes in the glass matrices.

The bactericidal effect can also be obtained using chemical processes in ceramic enamels that contain substances that provide silver cations. The diffusion of silver cations, $Ag^+$, present in the ceramic enamel deactivates the enzymes that favour oxygen supply to the bacteria, and in this way the cell membrane is destroyed preventing its proliferation. The antimicrobial effect of the silver has been well-known since antiquity and its incorporation in glass gives a bactericidal effect to the ceramic enamels and there are several procedures for obtaining it [WO2006/064059 A1] [US5807641]. The advantage of incorporating silver, in both the form of silver nanoparticles and in the form of silver cations in the glass network, is that the surface properties of the ceramic enamel are maintained. Its use is limited by the cost of the application and by the environmental risk uncontrolled lixiviation of silver cations represents. The main problem of the presence of silver cations in ceramic enamels is the durability of the bactericidal effect. For the bactericidal effect to occur, the silver ions have to migrate from the heart of the glass matrix to the medium where the bacteria are. The existence of a finite number of silver atoms and the protective nature of the glass matrix for their release, strongly limit in time the bactericidal response of these enamels, in clear contrast to the high durability required for enamelled ceramic products. A partial solution to this problem consists of designing glass matrices that are easier to attack and so increase the proportion of silver or lixiviable silver ions of the ceramic enamel, as described using phosphate glasses [KR20000004200 A]. This bactericidal effect is also obtained by combination with other cations that are incorporated in the glass phases such as copper or zinc cations [JP11228186]. The main limitation of these glazings is that, when their attackability is increased, the degradation of the surface is very severe and loses the surface properties that are required by industrial ceramic products.

Glasses exist that present high solubility in aqueous medium and the composition of which has a high percentage of alkaline and alkaline-earth cations [JP7257938 A]. The bactericidal property is attributed to the high values of pH caused by the release of the alkaline and alkaline-earth cations of the glass matrix. These types of glasses show a higher bactericidal effect when the specific surface of the glass is increased; therefore the glass is used in the form of glass powder for example by means of grinding. These types of products are called, in the background art, bioactive glasses. A considerable improvement of the bactericidal properties in the bioactive glasses is obtained using the controlled crystallisation of crystalline phases in the glass matrix so that the presence of these crystallisations generates a high number of edges or angles on the surface without reducing the solubility of the chemical species in the aqueous medium [US 7141520 B2]. The existence of crystallisations, in particular of crystals in the form of a needle, considerably contributes to breaking the membranes of the bacteria. The existence of nanocrystals in the form of a needle or with sharp edges is known in the field of the technique as effective given its bactericidal effect. It is obvious for any expert in ceramic enamel that despite the high effectiveness of the particles of bioactive glass, their application on surfaces of ceramic enamels for industrial ceramic products is not technologically compatible as ceramic powder does not comply with the technical requirements for an enamelled ceramic product.

An interesting aspect of the background art consists of the bactericidal effect of micro-rough surfaces that act as bacteria repellents [DE 19818956 A1]. Roughness is obtained in different materials such as polymers, metals and glasses by irradiation, stamping, abrasion or casting procedures on a micro-rough surface. As the consolidation by means of heat treatment of ceramic enamels generates a surface with little roughness, the generation of micro-roughness later on an enamelled surface represents a complex and financially unviable process.

As can be deduced from the background art, obtaining a bactericidal ceramic enamel for ceramic products presents practical application difficulties mainly due to restrictions in the effects provided by the bactericidal effect. One of the common aspects of the different procedures proposed and not resolved to date is the incompatibility of the processes with the aesthetic properties required by the enamelled ceramic materials that are added to the requirements established in the technical properties of industrial ceramics.

The objective of this invention comprises establishing the compositions and a production method of enamels for obtaining enamels with a controlled surface micro-roughness that present a bactericidal effect. The enamels subject to this invention are applicable as coatings in industrial ceramics, in both the production of ceramic tiles and in tableware, ceramic complements, structural ceramics and sanitary ceramics.

It can be seen that the use of mixtures and oxides is known, but in this invention, the oxides and proportions used are combined using a new procedure that has advantages over those known by the background art to produce in a controlled way the bactericidal effect in ceramic enamels.

On the other hand, the preparation procedure and formulations used in this invention are favourable to produce ceramic enamels with bactericidal properties in wide range of temperatures, extending their application to different techniques that cover from products for structural ceramics such as bricks and roof tiles, tableware, ceramic complements, red and white stoneware floor tiles, red and white paste wall tiles, porcelain stoneware tiles and sanitary porcelain enamels.

Another of the advantages this invention has is that the procedure used is compatible with the enamels normally used in the ceramics industry. In this way enamels with bactericidal effect can be applied in different ceramic processes maintaining the properties of the ceramic enamels such as the ease of cleaning, mechanical resistance and resistance to chemical attacks. A particularly favourable aspect of this invention is that its composition and procedure allows maintaining the aesthetic and decorative effects that characterise enamelled ceramic products.

## SUMMARY OF THE INVENTION

This invention provides, to an industrial ceramic product, a ceramic enamelled surface with controlled micro-roughness that presents bactericidal effect called bactericidal enamel. Bactericidal enamel with micro-roughness comprises in its composition the presence of zinc cations and at least one crystalline phase. The formation of the bactericidal enamel with micro-roughness is possible from an adequate combination of layers of enamel with a different composition. The combination of different layers of enamel is characterised by the existence of a relation between them, so that the outer layer is thinner than the inner layer. The thickness relation between the layers of outer and inner enamel is determined by the corresponding starting weights. The outer layer of enamel is characterised by presenting a lower viscosity at the maximum consolidation temperature of the enamel than the viscosity at the same temperature of the inner layer of enamel. The formation of the bactericidal enamel with micro-roughness from an adequate combination of layers of enamel with a different composition is possible using an adequate heat treatment.

A first object of the invention is a combination for a bactericidal ceramic enamel with micro-roughness, wherein it comprises a first formulation and a second formulation, each formulation having a defined quantity of zinc cations, such that the first formulation comprises an equivalent percentage of ZnO of $\leq 20\%$ in weight with respect to the total weight of said first formulation and the second formulation comprises an equivalent percentage or equivalent concentration of ZnO lower than the nominal corresponding to the composition of the first formulation.

According to particular embodiments, in the combination the first formulation comprises, at least:

- one feldspar;
- one glass frit or a combination of glass frits,
- zinc oxide; and
- one kaolinitic type clay.

According to additional particular embodiments in the combination:
- the first formulation includes feldspar, frit and kaolin, preferably in an interval of percentages in weight with respect to the total weight of the formulation:

| Component or equivalent oxide | Interval of percentage in weight |
|---|---|
| ZnO | $\leq 20\%$ |
| frit | 10 to 70% |
| feldspar | 20 to 60% |
| kaolin | 3 to 14% |

- the second formulation includes feldspar, frit and kaolin, preferably in an interval of percentages in weight with respect to the total weight of the formulation:

| Component or equivalent oxide | Interval of percentage in weight |
|---|---|
| frit | 10 to 70% |
| feldspar | 20 to 60% |
| kaolin | 3 to 14% |

- and the second formulation has an equivalent concentration of ZnO lower than the nominal corresponding to the composition of the first formulation.

When intervals of percentages in weight are mentioned, we must understand that the limits of both intervals are also included in them.

By "equivalent oxide" it is understood that the percentage of the referred cation (Zn for example) is maintained in the same proportion as that corresponding to the referred oxide (ZnO for example).

The frit can have the same or different composition for each of the two formulations. Preferably, in this embodiment, the frit has the same composition in the first formulation and in the second. The frit can comprise components that are present in the interval of percentages in weight with respect to the total weight of the frit:

| Equivalent oxide | Interval of percentage in weight |
|---|---|
| $SIO_2$ | 40 to 70% |
| $Al_2O_3$ | 6 to 30% |
| CaO | 2 to 25% |
| ZnO | $\leq 22\%$ |

(continued)

| Equivalent oxide | Interval of percentage in weight |
|---|---|
| $Na_2O$ | ≤ 10% |
| $K_2O$ | 0.5 to 4% |
| MgO | 0.5 to 9% |
| $B_2O_3$ | ≤ 15% |
| BaO | ≤5% |

According to additional particular embodiments, the first formulation also comprises, at least one component selected among:

- a second oxide;
- a ceramic pigment;
- a precursor of a pigment;

This ceramic pigment must be present in the first formulation in a percentage in weight with respect to the total weight of said formulation, of up to 10%, or in the second formulation in a percentage in weight with respect to the total weight of said formulation, of up to 10%, or in both in a percentage in weight with respect to each formulation, of up to 10%.

This invention also refers to the use of the combination defined to obtain an enamelled material, in which the first formulation is applied as an outer layer on a surface of the material and the second formulation is applied as at least one inner layer on said surface, so that the outer layer is thinner than the inner layer.

The defined combination can also be applied on glazed surfaces of ceramic products, on ceramic products for structural ceramics, sanitary ceramics or ornamental ceramics.

Likewise, the combination can be used for its application on materials selected among bricks, roof tiles, tableware, furniture, ceramic kitchen complements, ceramic floor and wall tiles, sanitary elements, structural ceramic elements, bathroom ceramic complements, porcelain stoneware tiles and sanitary porcelain enamels and ornamental ceramic elements.

This invention also refers to a bactericidal ceramic enamel wherein it comprises the combination of previously defined formulations.

In the enamel of the invention the combination of formulations is arranged such that the first formulation forms an outer layer of enamel in contact with the air and the second formulation forms an inner layer of enamel in contact with a surface, the outer layer being thinner than the inner layer.

Furthermore, this invention also refers to a bactericidal ceramic enamel wherein it is obtainable using a procedure that comprises the application of a combination of formulations defined previously on a surface of a material so that the first formulation forms an outer layer of enamel on the surface of the material and the second formulation forms an inner layer of enamel on said surface, and such that the outer layer is thinner than the inner layer.

According to particular embodiments, the outer layer of enamel has a viscosity at the maximum consolidation temperature of the enamel lower than the viscosity at the same temperature of the inner layer.

According to particular embodiments, the inner layer of enamel and the outer layer have between them a proportion in the weight such that the weight of the inner layer is higher than the weight of the outer layer, preferably, the outer layer has a weight lower than 450 $g/m^2$, more preferably lower than 300 15 $g/m^2$ and more preferably lower than 150 $g/m^2$.

According to particular embodiments for obtaining enamel, the procedure comprises subjecting the combination of formulations applied on a surface of a material at temperatures of 900°C to 1280°C.

On its surface, the bactericidal ceramic enamel comprises crystallisations corresponding to the crystalline phases of the family of tectosilicates and gahnite crystallisations.

According to particular embodiments, the inner layer of enamel is deposited on:

- a second enamel or enamel of a different nature that is being obtained
- a layer of engobe
- or directly on the ceramic substrate.

According to particular embodiments the inner layer of enamel is decorated with ceramic pigments.

According to particular embodiments, the surface of bactericidal micro-rough enamel has a mean Ra roughness value of over 0.7 μm, preferably over 1 μm, and a maximum Rt roughness value of over 7 μm, preferably over 10 μm.

This invention is also aimed at an enamelled material wherein it comprises a bactericidal ceramic enamel as defined previously.

The procedure to obtain micro-rough bactericidal enamels comprises at least applying an outer layer that corresponds to the first formulation defined previously that is deposited on an inner layer of enamel previously deposited. The composition the outer layer of enamel uses comprises:

- one feldspar;
- one glass frit or a combination of glass frits,
- one zinc oxide, ZnO, and;
- one kaolinitic type clay.

In a preferred embodiment of the composition of the invention, the outer layer of enamel also comprises a ceramic pigment. And in a more preferred embodiment the percentage in weight of the ceramic pigment in the outer layer of enamels is up to 10% with respect to the total weight of the composition. The ceramic pigments can be selected among the different types of pigments available in the ceramics industry such as, for example, pigments with spinel structure, although not limited to them.

The incorporation of a second oxide element, or of a ceramic pigment, or of a combination of both, or of a precursor of them, is characterised by modifying the chromatic coordinate of the enamel metallised with shine maintaining its bactericidal response. The incorporation of a second oxide element or of a ceramic pigment or of a combination of both or of a precursor of them different to those previously described in order to modify the chromatic coordinates does not represent an advantage with respect to the bactericidal properties of the layer of enamel. In this invention, when an oxide element is referred to, such as for example a metallic oxide, a restriction in its oxidation state is not established. Therefore, it being replaced by an oxide with a different oxidation state or even if it is replaced by a precursor of said oxide is not relevant as the subsequent firing processes of the resulting enamel are carried out at high temperatures in oxidising atmosphere, generally air.

In a particular embodiment, the formulation to obtain micro-rough bactericides and which is particularly adequate for applying on enamels for porcelain stoneware, wherein the combination of layers of enamel comprises a layer of outer enamel that uses the formulation referred to as first formulation. The formulation of the outer layer of enamel comprises ZnO, feldspar, frit and kaolin, which are preferably found in the interval of percentages in weight with respect to the total weight of the formulation expressed in table 1.

Table 1

| Component or equivalent oxide | Interval of percentage in weight |
| --- | --- |
| ZnO | $\leq 20\%$ |
| frit | 10 to 70% |
| feldspar | 20 to 60% |
| kaolin | 3 to 14% |

In the described particular embodiment, the frit corresponds to a glazed material that has been fritted and the components of which are preferably found in the interval of percentages in weight with respect to the total weight of the frit included in table 2.

Table 2

| Equivalent oxide | Interval of percentage in weight |
| --- | --- |
| $SIO_2$ | 40 to 70% |
| $Al_2O_3$ | 6 to 30% |
| CaO | 2 to 25% |
| ZnO | $\leq 22\%$ |
| $Na_2O$ | <10% |
| $K_2O$ | 0.5 to 4% |
| MgO | 0.5 to 9% |
| $B_2O_3$ | $\leq 15\%$ |

(continued)

| Equivalent oxide | Interval of percentage in weight |
|---|---|
| BaO | ≤5% |

In the described particular embodiment, the frit can contain other compounds considered minority and always in a composition lower than 1% in weight with respect to the total of the frit. Optionally, the frit can incorporate the ZnO the formulation totally or partially comprises.

The total content of ZnO in the enamel can be either reached by the content of the frit, or by the incorporation of particles of ZnO or by a mixture of the two.

The content of ZnO in the outer layer is from the start higher than the content in the inner layer.

The incorporation of the compounds in the fritting process guarantees the inerting of said compounds limiting the subsequent volatilization during the firing of the enamel. Likewise, and as known in the background art, the fritting processes allow adapting the raw materials for the subsequent use in the ceramics industry, facilitating their use using conventional techniques. The procedure described in this invention allows adapting the formulation for the development of layers of bactericidal enamels for the different supports commonly used in the ceramics industry. The required composition for a specific product can be obtained by combination of different frits, as long as the final resulting combination of the combination of frits is within the limits established in this invention.

In the described particular embodiment, the feldspar comprises a group of minerals of the family of the tectosilicates, or three-dimensional silicates or silicates with a structure in shell that are fundamentally constituted by igneous type rocks and that have as a characteristic a certain degree of replacement of silicon by aluminium. Mixtures of two or more of the aforementioned tectosilicates, three dimensional silicates and silicates with structure in shell can also be used.

According to particular embodiments, a mineral is used that is a mixture of feldspars that is known as nepheline.

Feldspars comprise aluminium and calcium silicates such as anorthite with the general formula $CaAl_2Si_2O_8$, or sodium silicates such as albite with general formula $NaAlSi_3O_8$, or potassium silicates such as potassium feldspar with general formula $KAlSi_3O_8$, or mixtures of these bases. Mixed minerals with a composition between potassium feldspar and albite are called alkaline feldspars, mixing minerals with a composition between albite and anorthite form the group of the plagioclases. All feldspars are hard minerals, with a specific weight of between 2.5 and 2.8 g/cm$^3$. Feldspars are used in a powdered form with a particle size lower than 100 $\mu$m, preferably lower than 63 $\mu$m.

In the particular embodiment described, the kaolinitic type clay or kaolin, or china clay, the general chemical composition of which is $Al_2Si_2O_5(OH)_4$ comprises a mineral from the family of the phyllosilicates that have a layer of silicon tetrahedrons joined by oxygens with a layer of alumina octahedrons. Kaolinitic type clay may be made up by a mixture of different clays and minerals, the composition of which is extensively described in the background art. Kaolinitic type clay allows suspending the formulation, in order to form a stable slip in the aqueous medium of the different elements that make up the formulation for layers of micro-rough enamels with bactericidal properties. The homogeneity of the composition of the slip and its rheological stability must be compatible with the different enamel deposition processes in humid environments. This formulation will be processed following similar routes to those conventionally used in the ceramic floor tile industry and that are extensively defined in the background art. In the preparation of enamels in aqueous environments other additives are commonly used to guarantee an adequate process and application of layers of enamels, such as deflocculants, dispersing agents, anti-foaming agents, suspension agents, plasticisers, glues, etc.

The use of conventional routes for shaping the enamel allows it to be applied by humid route methods, such as those known as hood, veil, disc, spraying or immersion, among others. Other less used routes can also give rise to the application of enamel such as tape casting, electrostatic deposition, among others.

Additionally, by drying said slip, a dried enamel is generated that can either be applied as dry applications, for example crushed frits, or after micronising as screen printing ink.

The normal systems used by the ceramics industry can be used to prepare the slip, such as grinding or dispersion. The average particle size of the slip of enamel of this invention will be such that it does not have a rejection over 5% in weight in a 63 $\mu$m sieve. The final size of the materials to make up the combination of the layers of enamel will be determined by the application technique used for making said layers of enamel.

In the referred particular embodiment, the inner layer of enamel comprises a similar composition to the outer layer of enamel reflected in table 1, where the equivalent concentration of ZnO presents a lower concentration than the nominal corresponding to the composition of the outer layer of enamel. The outer layer of enamel is characterised by having an equivalent content of zinc oxide that in proportion is higher than the one corresponding to the inner layer of enamel.

In a preferred embodiment of the composition of the invention, the inner layer of enamel also comprises a ceramic pigment, and in a more preferred embodiment the percentage in weight of the ceramic pigment in the inner layer of enamels is up to 10% with respect to the total weight of the formulation.

In the referred particular embodiment of micro-rough bactericidal enamel the proportion between the weight of the inner layer of enamel is higher than the weight of the outer layer of enamel. The weight unit is defined as the grams of enamel applied by unit of square metre of ceramic support, i.e., $g/m^2$. As an example but not limited to said example, a weight of 450 $g/m^2$ provides a thickness of 0.2 mm of layer of enamel after it has been heat consolidated.

Preferably, to obtain a micro-rough bactericidal enamel the weight used in the outer layer is lower than 450 $g/m^2$, more preferably the weight is lower than 300 $g/m^2$ and even more preferably the weight used in the outer layer is lower than 150 $g/m^2$.

The invention is based on firing in industrial cycle (e.g. mono-firing of a porcelain stoneware floor tile in a fast firing gas single layer kiln) of the previous formulation.

A particular object of the invention is constituted by the procedure by means of which frits are used with a different composition for both the formulation of the enamel of the outer layer and for the enamel of the inner layer. The modification of the composition of the frit thus represents an advantage that allows adjusting depending on the ceramic substrate used the range of temperatures in which the layer of micro-rough bactericidal enamel layer is developed. This procedure is favourable given that it allows its application in materials that require very different firing temperature ranges. In this invention, the range of temperatures in which micro-rough bactericidal enamels have been obtained is from 900°C to 1280°C.

The combination of layers of the composition of the invention is favourable to produce micro-rough bactericidal enamels in an extensive interval of temperatures.

In a second aspect, this invention refers to the use of the combination of layers of the formulation of the invention, such as enamel for coating ceramics, such as for example in sanitary porcelain enamels.

In a preferred embodiment the ceramics are tiles, bricks, roof tiles, floor tiles or decorative elements.

Another aspect of this invention refers to an enamelled material wherein it comprises the combination of layers of enamel of composition of the outer layer and of composition of the inner layer of the invention and a ceramic support.

The surface of the enamel of this invention comprises crystallisations corresponding to crystalline phases of the family of the tectosilicates such as for example anorthite, albite and solid solutions such as plagioclase. Other crystallisations such as the gahnite phase are present in a lower proportion on the surface of the enamel of this invention. Other crystallisations can be incorporated in the outer layer such as quartz, zircon, corundum, spinels, garnets, etc. The effect of these other crystallisations is related to the chromatic modification of the layer of enamel.

The reduction of the viscosity of the melting during heat treatment favours the formation of crystalline phases in the enamel. The lower viscosity of the outer layer of enamel in comparison with the viscosity of the inner layer of enamel at the maximum sintering temperature produces the partial diffusion of cations from the outer layer of enamel towards the inner layer of enamel, favouring in this way the presence of the crystallisations on the surface. This flow of mass from the outer layer towards the inner layer corresponds to the glass phase and in this way the crystalline phases of the family of the tectosilicates on the surface have edges and free sides of glass phase in the micro-rough enamel compositions of this invention. The presence of crystallisations on the surface is also favoured by a lower thickness of the outer layer of enamel compared to the inner layer of enamel. For a same composition this process is also favoured for firing cycles at higher temperatures and sintering cycles with a lower residence time at the maximum sintering temperature.

Another characteristic of the micro-rough enamels of this invention is that the content of gahnite type crystalline phase of the outer layer of enamel is lower than that corresponding to an enamel with an identical composition that is applied as a single layer or when its thickness in a combination of layers of enamels is higher than that established in the limits of this invention. The reduction in the crystallisation of the gahnite phase is favourable in the adequate combination of layers of enamel. The $Zn^{2+}$ cations occupy similar positions to the $Ca^{2+}$ cations in the glass network. A higher micro-roughness of the surface and the presence of $Zn^{2+}$ and $Ca^{2+}$ cations in the glass phase favour the synergy between the different physical and chemical processes that allow strengthening the bactericidal effect of the enamels of this invention.

Another aspect of this invention is that the layer of outer enamel can be either deposited on an enamel of a different nature or on a layer of engobe or directly on the ceramic substrate. In the previously described cases the viscosity of the support layer at the maximum firing temperature, regardless of its nature, must be lower than the viscosity of the outer layer of enamel at said temperature to produce the effect of formation of free glass phase crystals on the surface of the enamel.

Another aspect of the invention is that the inner layer of enamel may be decorated with ceramic pigments. This decoration may be a mass decoration due to the incorporation in the formulation of a ceramic pigment or may be a decoration on the surface due to the standard decoration techniques used in the ceramics industry such as for example, although not limited to these examples, screen printing, digital decoration or pad printing. This decoration is maintained underneath the outer layer of enamel of this invention after the ceramic part has been subjected to heat treatment. This aspect is particularly relevant as it allows using the bactericidal micro-rough enamels in the products demanded by the market conferring them with the bactericidal functionality.

The surface of the bactericidal micro-rough enamel is characterised by presenting a surface with a mean roughness value of over 0.7 $\mu$m, preferably over 1 $\mu$m, and a maximum Rt roughness value of over 7 $\mu$m, preferably over 10 $\mu$m.

The arithmetic mean value of the absolute values of the distances of the roughness profile of the mean line in the measurement section is defined as the mean surface roughness value, Ra. The surface roughness mean value is expressed in $\mu$m. The measuring section is at least 8 mm from the surface of the enamel.

The distance in micrometres, $\mu$m, between the maximum depth and the maximum height inside the measuring section, is defined as the maximum surface roughness value, Rt.

The surface roughness is determined using electronic instruments called roughness testers.

The bactericidal activity of the micro-rough enamels obtained according to this invention has been assessed using bacterial susceptibility tests. The samples were assessed according to standard JIS Z 2801, version revised in 2006. The microorganisms on which the susceptibility tests were conducted were *Staphylococcus aureus* (CECT 86) and *Escherichia coli* (CECT 516, ATCC 8739). To do so, initially $1*10^5$ CFU (colony forming units) were inoculated on each test tube. These samples were incubated at 37°C during 24 h and then the viable cells were counted. 3 replicas of each type of test tube were analysed.

As indicated in standard JIS Z 2801, the antimicrobial activity value of the samples after the assessment is obtained from the expression:

$$R= \log (B/C)$$

where B is the average of viable bacteria of the blank sample after 24 h of incubation at 37°C, and C is the average of viable bacteria of the antimicrobial sample after 24 h of incubation at 37 °C.

If R $\geq$ 2.0 it is considered that the sample assessed has bactericidal effectiveness.

The enamelled samples according to the procedure described in this invention present a high bactericidal effectiveness according to the described examples. Comparative examples of enamels with a similar composition have been incorporated, whose bactericidal effectiveness is lower than a value of R=2.

An aspect required for providing the bactericidal property in an enamelled ceramic is determined by the micro-roughness of the surface, by the existence of crystals on the surface and the existence of calcium cations and zinc cations in the glass matrix. The samples obtained as comparative examples of a similar composition and that present R<2 are characterised by a micro-roughness of Ra<0.7 $\mu$m and Rt< 7$\mu$m and by presenting the crystals of the surface covered by glass phase. Likewise, in the comparative examples that do not present a bactericidal effect, the presence of zinc in the formulation produces the formation of the gahnite phase with spinel structure, so reducing the proportion of $Zn^{2+}$ cations in the glass phase.

The micro-rough enamels with bactericidal effect of this invention are characterised by presenting values of R>2, preferably R>3 and with special preference R>5.

The micro-rough enamels with bactericidal effect of this invention are characterised by the surface roughness of the enamel presenting values of Ra>0.1 $\mu$m, preferably Ra>1.0 $\mu$m and Rt>7 $\mu$m, preferably Rt>10 $\mu$m.

The micro-rough enamels with bactericidal effect of this invention are characterised by the particles of the crystalline phases of the surface of the enamel presenting free sides and edges of the glass phase.

A first aspect of particular relevance related to the crystalline phases on the surface of the micro-rough enamels with bactericidal effect is that the gahnite crystalline phases are inhibited completely or partially in comparison with the enamels of the same composition applied in monolayer.

A second aspect of particular relevance is that the characteristics of the micro-rough enamels with bactericidal effect are obtained when the weight of the outer layer of enamel is lower than 450 g/m$^2$, preferably 300 g/m$^2$.

Another aspect that represents an advantage of this invention is that the bactericidal effectiveness is maintained after a prolonged exposure of the surface to an aqueous medium. The bactericidal effectiveness tests in samples of micro-rough enamels of this invention were maintained immersed in aqueous medium during 10 days, maintain a value of R>2 for the assayed bacteria.

An advantageous aspect of this invention is provided by the reduced thickness of the outer layer of enamel. This outer layer of enamel presents an adequate transparency so that it allows carrying out a decoration underneath the outer layer of enamel. This decoration is visible to the outside allowing decorating and aesthetically adding value to the resulting enamelled ceramic products equipping the outer surfaces with the required bactericidal property. An advantageous aspect of this invention is its economical aspect on using components that are common in the ceramics industry and in particular the use of feldspars that are low cost minerals that are very abundant in nature.

Another advantageous aspect of this invention refers to the use of the previously described enamelled material as a coating or decorative element, floors, walls, on facades of buildings, both inside and outside, or in any other non-conventional ceramic application, such as for example in urban environments, furnishings, sanitary fittings and applications in technical ceramics among others.

Throughout the description and claims the word "comprises" and its varieties do not intend to exclude other technical characteristics, additives, components or steps. For experts in the field, other objects, advantages and characteristics of the invention will partly be deduced in the description and partly in the practice of the invention. The following examples and drawings are provided as a guideline, and are not intended to be limited to this invention.

## DESCRIPTION OF THE FIGURES

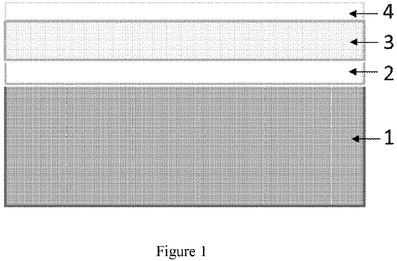

Figure 1.- Diagram to produce a bactericidal micro-rough enamel by means of a combination of inner layers of enamel (3) and outer layer of enamel (4) on a support of porcelain stoneware (1) that is coated in a layer of ceramic engobe (2).

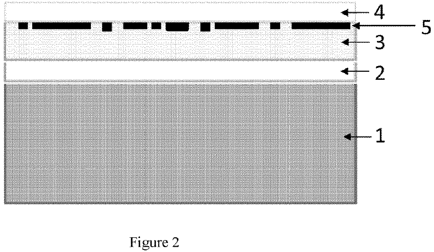

Figure 2.- Diagram to produce a bactericidal micro-rough enamel by means of a combination of inner layers of enamel (3) and outer layer of enamel (4) on a support of porcelain stoneware (1) that is coated in a layer of ceramic engobe (2). The enamel incorporates a decoration pattern (5) applied by means of ink by screen printing between the outer layers of enamel and the inner layer of enamel.

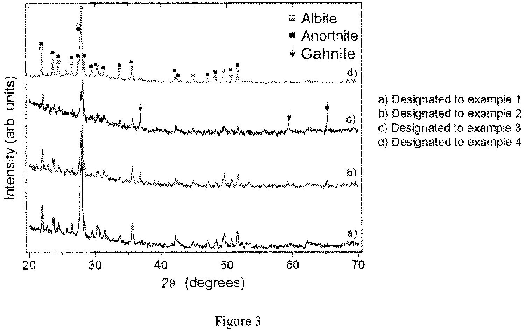

Figure 3.- Diagram of X-Ray Diffraction of the crystalline phases on the surface of enamels (a) designated to the comparative example 1 with a proportion of equivalents of ZnO of <1.0% in weight in its composition; (b) designated to the comparative example 2 with a proportion of equivalents of ZnO of 7.7% in weight in its composition; c) bactericidal micro-rough enamel designated to example 3 consisting of a combination of a layer of inner enamel with a proportion of equivalents of ZnO of <1.0% in weight and a weight of $\sim$459 g/m$^2$, and an outer layer of enamel with a proportion of equivalents of ZnO of <7.7% in weight and a weight of $\sim$138 g/m$^2$ and (d) bactericidal micro-rough enamel designated to example 4 consisting of a combination of an inner layer of enamel with a proportion of equivalents of ZnO of <1.0% in weight and a weight of $\sim$480 g/m$^2$, and an outer layer of enamel with a proportion of equivalent of ZnO of <7.7% in weight and a weight of $\sim$293 g/m$^2$.

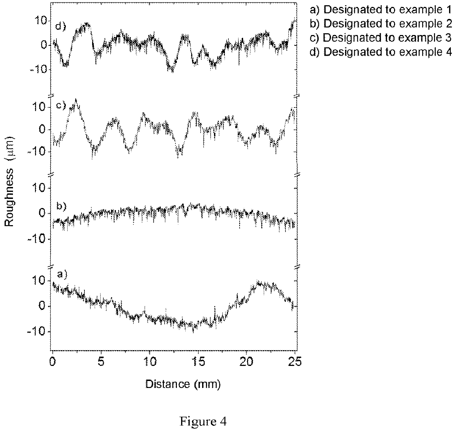

Figure 4.- Profilometry on the surface of enamels (a) designated to the comparative example 1 with a proportion of equivalents of ZnO of <1.0% in weight in its composition; (b) designated to the comparative example 2 with a proportion of equivalents of ZnO of 7.7% in weight in its composition; c) bactericidal micro-rough enamel designated to example 3 consisting of a combination of a layer of inner enamel with a proportion of equivalents of ZnO of <1.0% in weight and a weight of $\sim$459 g/m$^2$, and an outer layer of enamel with a proportion of equivalents of ZnO of <7.7% in weight and a weight of $\sim$138 g/m$^2$ and (d) bactericidal micro-rough enamel designated to example 4 consisting of a combination of an inner layer of enamel with a proportion of equivalents of ZnO of <1.0% in weight and a weight of $\sim$480 g/m$^2$, and an outer layer of enamel with a proportion of equivalent of ZnO of <7.7% in weight and a weight of $\sim$293 g/m$^2$.

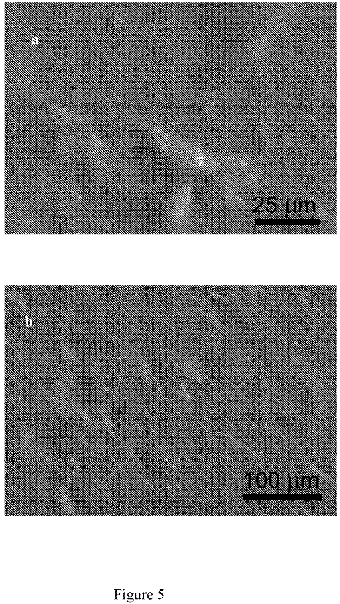

Figure 5.- Micrography using Field Effect Scanning Electron Microscopy of the surface of the enamels (a) designated to the comparative example 2 with a proportion of equivalents of ZnO of 13.0% in weight; and (b) bactericidal micro-rough enamel designated to example 4 consisting of a combination of an inner layer of enamel with a proportion of equivalents of ZnO of <1.0% in weight and a weight of $\sim$480 g/m$^2$, and an outer layer of enamel with a proportion of equivalents of ZnO of <7.7% in weight and a weight of $\sim$293 g/m$^2$.

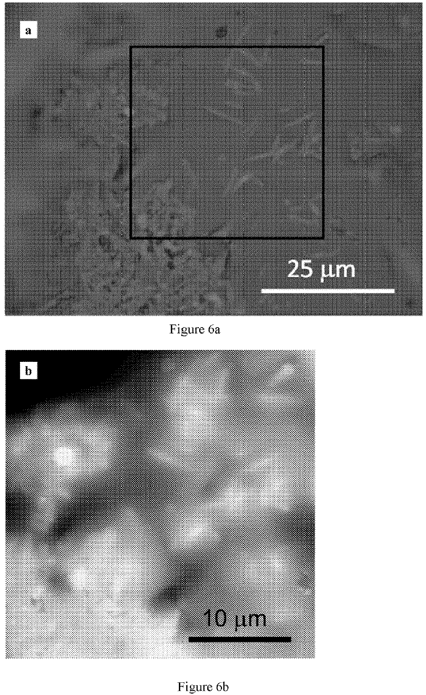

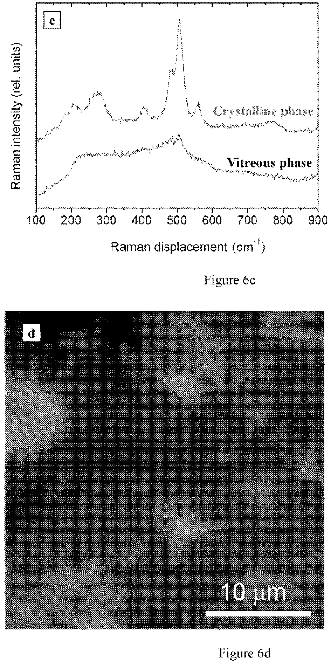

Figure 6.- Bactericidal micro-rough enamel designated to example 4 consisting of an inner layer of enamel with a proportion of ZnO of <1.0% and a weight of $\sim$480 g/m$^2$, and an outer layer of enamel with a proportion of equivalents of ZnO of <7.7% in weight and a weight of $\sim$293 g/m$^2$. (a) Micrography by means of Laser Scanning Confocal Microscopy showing the crystallisations on the surface of the bactericidal micro-rough enamel the box indicates the selected area; (b) Topography by means of Atomic Force Microscopy of the selected area, the shiniest areas correspond to the highest areas of the surface while the darker areas correspond to the deeper areas; (c) Characteristic Raman displacement spectra obtained in the selected area, the spectrum denominated crystalline phase corresponds to the crystallisations of albite and the spectrum denominated glass phase is characteristic of the areas where the existence of crystallisations is not observed; (d) X-Y image of the surface of the enamel showing the location of the crystalline phases corresponding with the albite phase (in a lighter colour) and the areas with absence of crystallisation corresponding to the glass phase (in a darker colour).

## EXAMPLES OF MODES FOR CARRYING OUT THE INVENTION

The invention will be illustrated below by means of some tests carried out by the inventors, that highlight the specificity and effectiveness of the procedure for obtaining enamelled materials with bactericidal effect with the combination of compositions of the invention.

Example no. 1 **Comparative example of procedure for obtaining micro-rough enamels for porcelain stoneware ceramic floor tiles. Inner Enamel Formulation.**

Obtaining a micro-rough enamel on a substrate of porcelain stoneware. The following formulations of raw materials are used to carry out this process in percentages in weight with respect to the total weight:

    a) 50% in weight of en peso de feldspar, and
    b) 40% in weight of a frit, and
    c) 10% in weight of kaolin.

In the formulation of inner enamel the composition expressed in the percentage in equivalent oxide with respect to the total is:

    a) 55.3% of equivalent $SiO_2$, and
    b) 22.3% of equivalent $Al_2O_3$, and
    c) 8.3% of equivalent CaO, and
    d) 5.1% of equivalent $Na_2O$, and
    e) 3.1 % of equivalent $K_2O$, and
    f) 3.1 % of equivalent MgO, and
    g) 2.3% of other minority components such as for example ZnO, $B_2O_3$, $TiO_2$, $Fe_2O_3$, BaO, $P_2O_5$, $SnO_4$, $Bi_2O_3$, or $WO_3$, in a concentration lower than 1% each;

The previous formulation is homogenised in aqueous medium in a concentration of 60% in weight of content in solids. 0.2% in weight of carboxymethyl cellulose type glue is added to this mixture, 0.25% in weight of a sodium tripolyphosphate and 0.05% in weight of a Adicide type preservative. The mixture is homogenised by milling in a alumina ball mill to make a stable suspension with a density of over 1.7 $g/cm^3$. The deposition of this suspension was carried out using an airbrush on the ceramic support of porcelain paste with a weight of 50 grammes for a 33x33 cm part.

The enamel deposited on the support was heat treated at a temperature of 1198 °C in an oxidising atmosphere in single layer fast firing kiln in a cycle with a duration of 50 minutes. As a result, a glass coating with a silky appearance and white colour was obtained on the porcelain stoneware support.

This enamel is characterised by having a micro-rough surface with Ra=0.68 $\mu$m and Rt=7.0 $\mu$m. The enamel surface is also characterised by having crystalline phases identified by Diffraction of X-rays, and albite (with ICDD, International Center for Diffraction Data, data sheet JCPDS 041-1480) and anorthite (with ICDD, JCPDS 018-1202) type feldspar crystalline particles. Said crystalline phases are in general covered by a layer of glass phase.

The enamel is characterised by not presenting biocidal activity with values of R=0 for *Staphylococcus aureus* and R=0 for *Escherichia coli.*

Example no. 2 **Comparative example of procedure for obtaining micro-rough enamels for porcelain stoneware ceramic floor tiles. Outer Enamel Formulation.**

Obtaining a micro-rough enamel on a substrate of porcelain stoneware. The following formulations of raw materials are used to carry out this process in percentages in weight with respect to the total weight:

    a) 46.3% in weight of en peso de feldspar, and
    b) 37% in weight of a frit, and
    c) 9.3% in weight of kaolin, and
    d) 7.4% in weight of ZnO.

In the formulation of inner enamel the composition expressed in the percentage in equivalent oxide with respect to the total is:

    e) 50.4% of equivalent $SiO_2$, and

    f) 20.3% of equivalent $Al_2O_3$, and

    g) 8.0% of equivalent CaO, and

    h) 7.7% of equivalent ZnO, and

i) 5.0% of equivalent $Na_2O$, and

j) 2.9% of equivalent $K_2O$, and

k) 2.8% of equivalent MgO, and

l) 2.9% of other minority components such as for example $TiO_2$, $Fe_2O_3$, BaO, $P_2O_5$, $SnO_4$, $Bi_2O_3$, or $WO_3$, in a concentration lower than 1 %

The previous formulation is homogenised in aqueous medium in a concentration of 60% in weight of content in solids. 0.2% in weight of carboxymethyl cellulose type glue is added to this mixture, 0.25% in weight of a sodium tripolyphosphate and 0.05% in weight of a Adicide type preservative. The mixture is homogenised by milling in a alumina ball mill to make a stable suspension with a density of over 1.6 $g/cm^3$. The deposition of this suspension was carried out using an airbrush on the ceramic support of porcelain paste with a weight of 50 grammes for a 33x33 cm part.

The enamel deposited on the support was heat treated at a temperature of 1198 °C in an oxidising atmosphere in single layer fast firing kiln in a cycle with a duration of 50 minutes. As a result, a glass coating with a silky appearance and white colour was obtained on the porcelain stoneware support. This enamel is characterised by having a micro-rough surface with Ra=0.73 $\mu$m and Rt=6.2 $\mu$m. The surface of the enamel is also characterised by presenting crystalline phases identified by diffraction of X-rays, and crystalline particles of albite and anorthite type feldspars and by gahnite phase particles (with data sheet ICDD JCPDS 82-1043). Said crystalline phases are generally covered by a layer of glass phase.

The enamel is characterised by not presenting biocidal activity with values of R=1.5 for *Staphylococcus aureus* and R=0 for *Escherichia coli.*

Example 2 was repeated but using a higher percentage in weight of ZnO of 13% and the resulting enamel is characterising by presenting an increase in the gahnite phase. The enamel is characterised by not presenting biocidal activity with values of R=1.8 for *Staphylococcus aureus* and R=0 for *Escherichia coli.*


Example no. 3 **Example of procedure for obtaining micro-rough enamels with bactericidal activity for porcelain stoneware ceramic floor tiles.**

Obtaining a micro-rough enamel with bactericidal effect on a substrate of porcelain stoneware. To carry out this process the described formulations of raw materials are used, in percentages in weight with respect to the total weight described in comparative examples 1 and 2.

In the first place, the suspension of example 1 was deposited called inner layer of enamel, using an airbrush on the ceramic support of porcelain paste with a weight of 50 grammes for a 33x33 cm part.

In the second place and on top of the previous deposition the suspension of example 2 was deposited called outer layer of enamel modified with the described addition of a pigment, using an airbrush on the ceramic support of porcelain paste with a weight of 50 grammes for a 33x33 cm part.

The combination of layers of enamel deposited on the support was heat treated at a temperature of 1198 °C in an oxidising atmosphere in single layer fast firing kiln in a cycle with a duration of 50 minutes. As a result, a glass coating with a silky appearance and white colour was obtained on the porcelain stoneware support. This enamel is characterised by having a micro-rough surface with Ra=0.98 $\mu$m and Rt=7.8 $\mu$m. The surface of the enamel is also characterised by presenting crystalline phases identified by diffraction of X-rays, and crystalline particles of albite and anorthite type feldspars and by gahnite phase particles. It must be pointed out that the presence of gahnite phase particles on the surface is very low compared to the enamels in example 2. Said crystalline phases are partially covered by a layer of glass phase.

The enamel is characterised by not presenting biocidal activity with values of R=1.6 for *Staphylococcus aureus* and R=0 for *Escherichia coli.*

Example 3 was repeated but on top of the deposition of example 1 called inner layer of enamel, in this case the suspension of example 2 was deposited called outer layer of enamel, using an airbrush on the ceramic support of porcelain paste with a weight of 15 grammes for a 33x33 cm part.

The enamel is characterised by having biocidal activity with values of R=5.6 for *Staphylococcus aureus* and R=3.6 for *Escherichia coli.*

The measurement of biocidal activity was repeated after keeping the surfaces of the samples submerged in water deionised by osmosis during 10 days. It is highlighted that after the aging test the biocidal activity is maintained with values of R=6.0 for *Staphylococcus aureus* and R=6.0 for *Escherichia coli.*

Example 3 was repeated on a support of porcelain stoneware of 33x33 cm using a first layer of enamel with a weight of 50 g called inner enamel according to the procedure of example 1, and of a second layer of enamel with a weight of 15 g, called outer layer of enamel with the procedure of example 2, but in this case the composition was carried out using a mixture of frits with different melting so that it maintains the aforementioned composition. The rest of the process was continued according to example 3. It is highlighted that the results were reproduced and as an advantage it is observed that the mixture of different frits favours the adjustment of the composition.

Example no. 4 **Example of procedure for obtaining micro-rough enamels with bactericidal activity for porcelain stoneware floor tiles with screen printing.**

Obtaining a micro-rough enamel with bactericidal effect on a substrate of porcelain stoneware that contains decoration. To carry out this process the described formulations of raw materials are used, in percentages in weight with respect to the total weight described in comparative examples 1 and 2.

In the first place, the suspension of example 1 was deposited called inner layer of enamel modified with the described addition of a pigment, using an airbrush on the ceramic support of porcelain paste with a weight of 52 grammes for a 33x33 cm part.

In the second place, and on the previous deposition, a stone type decoration pattern was deposited using screen printing, on the layer of inner enamel consisting of a decoration using standard inks.

In the third place, the suspension of example 2 was deposited called outer layer of enamel modified with the described addition of a pigment, using an airbrush on the ceramic support of porcelain paste with a weight of 32 grammes for a 33x33 cm part.

The combination of layers of enamel deposited on the support was heat treated at a temperature of 1220 °C in an oxidising atmosphere in single layer fast firing kiln in a cycle with a duration of 39 minutes. As a result, a glass coating with a silky appearance that presents the decoration pattern was obtained on the porcelain stoneware support. This enamel is characterised by having a micro-rough surface with Ra=1.15 $\mu$m and Rt=12.2 $\mu$m.

The enamel is characterised by having biocidal activity with values of R=6.0 for *Staphylococcus aureus* and R=2.6 for *Escherichia coli.*

Example 3 was repeated but in this case the suspension of example 2 was deposited called outer layer of enamel, using an airbrush on the ceramic support of porcelain paste with a weight of 16 grammes for a 33x33 cm part.

The enamel is characterised by having biocidal activity with values of R=6.0 for *Staphylococcus aureus* and R=6.0 for *Escherichia coli.* This enamel is characterised by having a micro-rough surface with Ra=1.02 $\mu$m and Rt=13.6 $\mu$m.

It is highlighted that the outer layer of enamel maintains the pattern of the introduced decoration.

Example 4 was repeated but in this case after preparing the suspensions of the inner and outer enamels, the described combination of these enamels was deposited on the substrate by hood. The rest of the process was continued according to example 4. It is highlighted that similar bactericidal activity results were obtained, but in this case with a lower number of surface application defects.

Example no. 5 **Example of procedure for obtaining micro-rough coloured enamels with bactericidal activity for porcelain stoneware floor tiles with decoration.**

Obtaining a micro-rough coloured enamel with bactericidal effect on a substrate of porcelain stoneware. To carry out this process the described formulations of raw materials are used, in percentages in weight with respect to the total weight described in comparative examples 1 and 2. In these compositions 2% in weight of a standard coral pink pigment was added consisting of Fe-ZrSiO$_4$ with zircon structure. Modifications by the addition of a pigment give rise to coloured enamels.

In the first place, the suspension of example 1 was deposited called inner layer of enamel modified with the described addition of a pigment, using an airbrush on the ceramic support of porcelain paste with a weight of 50 grammes for a 33x33 cm part.

In the second place, the suspension of example 2 was deposited called outer layer of enamel modified with the described addition of a pigment, using an airbrush on the ceramic support of porcelain paste with a weight of 15 grammes for a 33x33 cm part.

The combination of layers of enamel deposited on the support was heat treated at a temperature of 1198 °C in an oxidising atmosphere in single layer fast firing kiln in a cycle with a duration of 45 minutes. As a result, a glass coating with a silky appearance and pink colour was obtained on the porcelain stoneware support. This enamel is characterised by having a micro-rough surface with Ra=1.06 $\mu$m and Rt=11.0 $\mu$m.

The enamel is characterised by having biocidal activity with values of R=5.8 for *Staphylococcus aureus* and R=3.6 for *Escherichia coli.*

Example 5 was repeated but in this case the suspension of example 2 was deposited called outer layer of enamel modified with the described addition of a pigment, using an airbrush on the ceramic support of porcelain paste with a weight of 15 grammes for a 33x33 cm part.

The enamel is characterised by having biocidal activity with values of R=6.0 for *Staphylococcus aureus* and R=3.6 for *Escherichia coli.*

**Claims**

1. A combination for a bactericidal ceramic enamel with micro-roughness, **characterized in that** it comprises a first formulation and a second formulation, each formulation having a defined quantity of zinc cations, such that the first formulation comprises an equivalent percentage of ZnO of < 20% in weight with respect to the total weight of said first formulation, and the second formulation comprises an equivalent percentage of ZnO lower than the nominal one corresponding to the composition of the first formulation.

2. A combination for ceramic enamel according to claim 1, wherein the first formulation comprises at least:

   - one feldspar;
   - a glass frit or a combination of glass frits,
   - zinc oxide, and
   - one kaolinitic type clay.

3. A combination for enamel according to claim 1 or 2, wherein:

   - the first formulation comprises feldspar, frit and kaolin, preferably in an interval of percentages in weight with respect to the total weight of the formulation:

   | Component or equivalent oxide | Interval of percentage in weight |
   |---|---|
   | ZnO | $\leq 20\%$ |
   | Frit | 10 to 70% |
   | Feldspar | 20 to 60% |
   | Kaolin | 3 to 14% |

   - the second formulation comprises feldspar, frit and kaolin, preferably in an interval of percentages in weight with respect to the total weight of the formulation:

   | Component or equivalent oxide | Interval of percentage in weight |
   |---|---|
   | Frit | 10 to 70% |
   | Feldspar | 20 to 60% |
   | Kaolin | 3 to 14% |

   - and the second formulation has an equivalent concentration of ZnO lower than the nominal one corresponding to the composition of the first formulation.

4. A combination for enamel according to claim 3, wherein the frit comprises some components that are present in the interval of percentages in weight with respect to the total weight of the frit:

   | Equivalent oxide | Interval of percentage in weight |
   |---|---|
   | $SiO_2$ | 40 to 70% |
   | $Al_2O_3$ | 6 to 30% |
   | CaO | 2 to 25% |
   | ZnO | $\leq 22\%$ |
   | $Na_2O$ | $\leq 10\%$ |
   | $K_2O$ | 0.5 to 4% |

(continued)

| Equivalent oxide | Interval of percentage in weight |
|---|---|
| MgO | 0.5 to 9% |
| $B_2O_3$ | ≤15% |
| BaO | ≤5% |

5. A combination of formulations according to claims 1 to 4, wherein the first formulation also includes, at least one component selected among:

  - a second oxide;
  - a ceramic pigment;
  - a precursor of a pigment.

6. A combination according to claim 5, wherein said ceramic pigment is present in the first formulation in a percentage in weight with respect to the total weight of said formulation of up to 10%, or in the second formulation in a percentage in weight with respect to the total weight of said formulation of up to 10%, or in both in a percentage in weight with respect to each formulation of up to 10%.

7. Use of the combination defined in one of claims 1 to 6 to obtain an enamelled material, in which the first formulation is applied as an outer layer on a surface of the material and the second formulation is applied as at least one inner layer on said surface, so that the outer layer is thinner than the inner layer.

8. Use of the combination according to claim 7 for its application on glazed surfaces of ceramic products, on ceramic products for structural ceramics, sanitary ceramics or ornamental ceramics.

9. Use of the combination for ceramic enamel according to claim 7 for its application on materials selected among bricks, roof tiles, tableware, furniture, ceramic kitchen complements, ceramic floor and wall tiles, sanitary elements, structural ceramic elements, bathroom ceramic complements, porcelain stoneware tiles and sanitary porcelain enamels and ornamental ceramic elements.

10. A bactericidal ceramic enamel, wherein it comprises a combination of formulations defined in one of claims 1 to 6.

11. A bactericidal ceramic enamel according to claim 10, wherein the combination of formulations is arranged such that the first formulation forms an outer layer of enamel in contact with the air and the second formulation forms an inner layer of enamel in contact with a surface, the outer layer being thinner than the inner layer.

12. A bactericidal ceramic enamel wherein it is obtainable using a procedure that comprises the application of a combination of formulations defined in one of claims 1 to 6, on a surface of a material so that the first formulation forms an outer layer of enamel on the surface of the material and the second formulation forms an inner layer of enamel on said surface, and such that the outer layer is thinner than the inner layer.

13. A bactericidal ceramic enamel according to one of claims 10 to 12, wherein the outer layer of enamel has a viscosity at the maximum consolidation temperature of the enamel lower than the viscosity at the same temperature of the inner layer.

14. A bactericidal ceramic enamel according to one of claims 10 to 12, wherein the inner layer of enamel and the outer layer have between them a proportion in weight such that the weight of the inner layer is higher than the weight of the outer layer of enamel.

15. A bactericidal ceramic enamel according to claim 14, wherein the outer layer has a weight under 450 $g/m^2$, more preferably under 300 $g/m^2$ and more preferably under 150 $g/m^2$.

16. A bactericidal ceramic enamel according to one of claims 10 to 15, wherein the procedure comprises subjecting the combination of formulations applied on a surface of a material at temperatures of between 900°C to 1280°C.

**17.** A bactericidal ceramic enamel according to one of claims 10 to 16, wherein on its surface the enamel comprises crystallisations corresponding to the crystalline phases of the family of tectosilicates and gahnite crystallisations.

**18.** A bactericidal ceramic enamel according to claims 10 to 17, wherein the inner layer of enamel is deposited on:

- an enamel of a different nature
- a layer of engobe
- or directly on the ceramic substrate.

**19.** A bactericidal ceramic enamel according to claims 10 to 19, wherein the inner layer of enamel is decorated with ceramic pigments.

**20.** A bactericidal ceramic enamel according to one of claims 10 to 19, wherein the surface of bactericidal micro-rough enamel has a mean Ra roughness value of over 0.7 $\mu$m, preferably over 1 $\mu$m, and a maximum Rt roughness value of over 7 $\mu$m, preferably over 10 $\mu$m.

**21.** An enamelled material, wherein it comprises a bactericidal ceramic enamel defined in one of claims 10 to 17.

Figure 1

Figure 2

a) Designated to example 1
b) Designated to example 2
c) Designated to example 3
d) Designated to example 4

Figure 3

a) Designated to example 1
b) Designated to example 2
c) Designated to example 3
d) Designated to example 4

Figure 4

Figure 5

Figure 6a

Figure 6b

Figure 6c

Figure 6d

## INTERNATIONAL SEARCH REPORT

| International application No. |
|---|
| PCT/ES2012/070655 |

### A. CLASSIFICATION OF SUBJECT MATTER

***C03C8/04*** (2006.01)
***C04B41/89*** (2006.01)
According to International Patent Classification (IPC) or to both national classification and IPC

### B. FIELDS SEARCHED

Minimum documentation searched (classification system followed by classification symbols)
C03C, C04B

Documentation searched other than minimum documentation to the extent that such documents are included in the fields searched

Electronic data base consulted during the international search (name of data base and, where practicable, search terms used)

INVENES, EPODOC, WPI, TXT, NPL, XPESP

### C. DOCUMENTS CONSIDERED TO BE RELEVANT

| Category* | Citation of document, with indication, where appropriate, of the relevant passages | Relevant to claim No. |
|---|---|---|
| A | EP 0921105 A1 (ESMALTES S A ) 09/06/1999, paragraphs [5-10, 19-20]. | 1-21 |
| A | EP 0653161 A1 (SUMITOMO OSAKA CEMENT CO LTD ) 17/05/1995,page 3, line 30 - page 6, line 60; figures 1 - 2. | 1-21 |
| A | ES 2331284 A1 (NANOBIOMATTERS S L ) 28/12/2009,page 4, line 3 - page 5, line 56. | 1-21 |
| A | WO 2008152174 A1 (CONSEJO SUPERIOR INVESTIGACIONET AL.) 18/12/2008, page 4, line 20 – page 7, line 2. | 1-21 |
| A | US 6410633 B1 (HIKATA HAJIME ET AL.) 25/06/2002, paragraphs [10 - 23]. | 1-21 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 02/01/2013 | **(15/01/2013)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. García González |
| | Telephone No. 91 3495315 |

Form PCT/ISA/210 (second sheet) (July 2009)

## INTERNATIONAL SEARCH REPORT

Information on patent family members

International application No.

PCT/ES2012/070655

| Patent document cited in the search report | Publication date | Patent family member(s) | Publication date |
|---|---|---|---|
| EP0921105 AB | 09.06.1999 | ID21394 A | 03.06.1999 |
| | | PL330034 A | 07.06.1999 |
| | | PL194298 B | 31.05.2007 |
| | | EP19980204021 | 28.11.1998 |
| | | ES2142249 AB | 01.04.2000 |
| | | AT203981 T | 15.08.2001 |
| | | DK921105 T | 05.11.2001 |
| | | PT921105 E | 30.01.2002 |
| | | DE69801305 T | 08.05.2002 |
| | | EG22468 A | 26.02.2003 |
| EP0653161 AB | 17.05.1995 | WO9427442 A | 08.12.1994 |
| | | JP6340513 A | 13.12.1994 |
| | | JP3267387B2 B | 18.03.2002 |
| | | JP7101791 A | 18.04.1995 |
| | | EP19940916428 | 31.05.1994 |
| | | JP7291658 A | 07.11.1995 |
| | | JP3051019B2 B | 12.06.2000 |
| | | DE653161 T | 04.01.1996 |
| | | DE69408096 T | 10.06.1998 |
| | | US5807641 A | 15.09.1998 |
| | | HK1003589 A | 30.10.1998 |
| | | US5882808 A | 16.03.1999 |
| ES2331284 AB | 28.12.2009 | CA2728884 A | 30.12.2009 |
| | | AU2009263774 A | 30.12.2009 |
| | | WO2009156975 A | 30.12.2009 |
| | | MX2010014346 A | 03.05.2011 |
| | | EP2319881 A | 11.05.2011 |
| | | EP20090769783 | 25.06.2009 |
| | | US2011142899 A | 16.06.2011 |
| | | CN102124049 A | 13.07.2011 |
| | | JP2011526939 A | 20.10.2011 |
| | | RU2011102696 A | 27.07.2012 |
| WO2008152174 A | 18.12.2008 | ES2310139 AB | 16.12.2008 |
| US6410633 B | 25.06.2002 | JP11060268 A | 02.03.1999 |
| | | JP3845975B2 B | 15.11.2006 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3063735 B
- ES 2142249 B1
- WO 2006064059 A1
- US 5807641 A
- KR 20000004200 A
- JP 11228186 B
- JP 7257938 A
- US 7141520 B2
- DE 19818956 A1

**Non-patent literature cited in the description**

- **P. ESCRIBANO ; J. B. CARDA ; E. CORDONCIL-LO.** Esmaltes y pigmentos Cerámicos. *Faenza Editrice S.L. Castellón,* 2001